# EUROPEAN PATENT SPECIFICATION

(11) **EP 1 895 333 B1**
(45) Date of publication and mention of the grant of the patent: **02.03.2011**
(21) Application number: 07115043.7
(22) Date of filing: 27.08.2007
(51) Int. Cl.: G02B 1/10, G02B 1/11, C08J 7/04, C09D 167/02, C09D 183/04

(54) **Hard coating composition and plastic optical product**
Hartbeschichtungszusammensetzung und optisches Kunststoffprodukt
Composition de revêtement dur et produit optique en plastique

(30) Priority: 28.08.2006 JP 2006230053; 18.10.2006 JP 2006283238
(43) Date of publication of application: 05.03.2008
(73) Proprietor: Tokai Optical Co., Ltd., Aichi 444-2192 (JP)
(72) Inventor: Otani, Noboru, OKAZAKI-SHI, AICHI 444-2192 (JP); Shimizu, Tomoko, OKAZAKI-SHI, AICHI 444-2192 (JP); Imai, Koji, OKAZAKI-SHI, AICHI 444-2192 (JP)
(74) Representative: Intès, Didier Gérard André

(56) References cited:
- EP-A- 1 273 639
- EP-A- 1 566 666
- US-A1- 2002 064 665

## Description

### Field of the Invention

The present invention relates to a hard coating layer formed on the surface of a plastic optical substrate such as spectacle lenses, and to plastic optical products on the surface of which the hard coating layer is formed.

### Description of the Related Art

Since plastic lenses have the advantages of lightness, more splinterless, and easier to be colored than glass lenses, they have been used extensively as spectacle lenses such as lenses for vision correction and sunglasses. Since the plastic lenses have the properties of being softer and more susceptible to scratch than the glass lenses, however, the hard coating layer has been formed on the surface of the plastic lenses so far.

In recent years, the plastic lenses, especially for visual correction, have become thinner using high refractive index materials. JP-A-2-270859 describes one example of spectacle lenses using such high refractive index materials. One of the problems occurred when the hard coating layer is formed on the spectacle lenses of such high refractive index materials is an interference pattern occurred from a difference in an refractive index between the hard coating layer and the spectacle lenses. This interference pattern gives rise to defects in terms of appearance of the spectacle lenses (visual appearance of lenses when viewed from others). Accordingly, a technique for materializing a hard coating layer of high refractive index has been developed by bringing the refractive index of the hard coating layer closer to the refractive index of the spectacle lenses using high refractive index materials. JP-A-3-68901 describes a technique related to such high refractive index hard coating layer. JP-A-3-68901 describes the improvement of refractive index of the hard coating layer formed by adding inorganic oxide microparticle mainly made of titanium oxide to hard coating liquid.

On the contrary, although a titanium oxide contributes to improvement of refractive index of the hard coating layer, other physical property, for example, the weathering performance is inferior as compared with the hard coating layer in which the titanium oxide is not contained. Specifically, the hard coating layer is deteriorated by photocatalytic action of the titanium oxide due to ultraviolet rays, so it is more likely to occur crack or layer peeling as compared with the hard coating layer without the titanium oxide. Since the photocatalytic action accelerates generation of free radical in the presence of oxygen, it may be considered that coating (for example, oxide coating such as oxide silicon) is evaporated on the surface of the hard coating layer to improve the weathering performance. Since such evaporation coating has insufficient heat resistance performance, the coating will be peeled due to aged deterioration. Accordingly it cannot become adequate means to improve the weathering performance US 2002/064665 A1 discloses a hard coating composition that can be applied to a plastic substrate in order to provide scratch resistance. However weathering resistance has to be improved. Therefore, a technique is hoped to provide the hard coating layer itself with sufficient weathering performance.

The present invention is devised to resolve the above-mentioned problems. It is an object of the invention to provide a hard coating composition for forming a high refractive index hard coating layer with better weathering performance and plastic optical products having such hard coating layer.

### Disclosure of the Invention

In order to accomplish the above-mentioned object, the present invention provides a hard coating composition for forming a hard coating layer on a surface of a plastic optical substrate that contains the following components A to E:
A. Organosilicon compound's hydrolysate
B. Titanium-oxide-based composite metal oxide fine particles
C. Dicyandiamide
D. Organic polycarboxylic acid
E. Co(II) compound

In addition, the present invention provides a plastic optical product comprising a hard coating layer which is either directly formed on a surface of a plastic optical substrate or indirectly formed on such surface for example by being formed on another layer applied on said surface, characterized in that the hard coating layer is made of a hard coating composition that contains the following components A to E:
A. Organosilicon compound's hydrolysate
B. Titanium-oxide-based composite metal oxide fine particles
C. Dicyandiamide
D. Organic polycarboxylic acid
E. Co(II) compound

As plastic materials used for the present invention, for example, polymethyl methacrylate and its copolymer, polycarbonate, polydiethyleneglycol bis-allylcarbonate (CR-39), cellulose acetate, polyethylene terephthalate, polyvinyl chloride, polyurethane resin, polythiourethane, and other sulfur-containing resin are enumerated as an example. Plastic materials with a refractive index of 1.58 or more such as polycarbonate, polythiourethane, and other sulfur-containing resin are favorable for making the high refractive index hard coating of the invention. As an example of application for optical substrates, plastic lenses for glasses are typically enumerated.

As a constituent of hard coating composition, a hydrolysate of silicon analogue is an organosilicon compound expressed by a general formula as follows:

R¹R²ₙSiX₃₋ₙ (n=0 or 1) (1)

(where, R¹ indicates an organic group having a reaction group capable of polymerizing, R² a hydrocarbon group with the number of carbons of 1 to 6, and X a hydrolysis group)

Specifically, as examples of reaction group capable of polymerizing of R¹, vinyl, allyl, acryl, methacryl, epoxy, mercapto, cyano, amino groups, and so forth are enumerated. An epoxy group is the most favorable as R¹. This is because hydrolysates of silicon analogue are ring-opening polymerized in the presence of epoxy group and serve to improve abrasion-resistant, weathering resistance, and chemical resistance.

Besides, as examples of R², methyl, ethyl, butyl, vinyl, phenyl groups, and so forth are enumerated.

Moreover, X is a functional group capable of hydrolyzing. Specifically, examples of alkoxy group such as methoxy, ethoxy, methoxyethoxy group, halogen group such as chloro, bromo group, acyloxy group, and so forth are enumerated. An alkoxy group is the most favorable as X.

Specifically, as examples of the above-mentioned organosilicon compound, vinyltrialkoxysilane, vinyltrichlorosilane, vinyltri(β-methoxy-ethoxy)silane, allyltrialkoxysilane, acryloxypropyltrialkoxysilane, methacryloxypropyltrialkoxysilane, methacryloxypropyldialkoxymethylsilane, γ -glycidoxypropyltrialkoxysilane, β -(3,4-epoxycyclohexyl)-ethyltrialkoxysilane, mercaptopropyltrialkoxysilane, γ -aminopropyltrialkoxysilane, N- β (aminoethyl)- γ -aminopropylmethyldialkoxysilane, and so forth are enumerated. Besides, in addition to organosilicon compound of general formula (1), it is possible to make adjustments of physical property of hardness and so forth in conjunction with tetraalkoxysilane, methyltrialkoxysilane, and so forth.

As titanium-oxide-based composite metal oxide fine particles, one or more types of oxides may be selected from silicon, aluminum, tin, zirconium, iron, antimony, niobium, tantalum, tungsten, and so forth for fine particles other than titanium oxide. Moreover, it is favorable that the uppermost surface is coated with an antimony oxide. Moreover, it is more favorable that the uppermost surface of the composite metal oxide fine particles made up of especially zirconium oxide and silicon oxide, which are integrally bound to titanium oxide, is coated with an antimony oxide according to the invention.

The composite metal oxide fine particles usually have average particle diameter not much exceeding 1 to 100 nm, favorably not much exceeding 3 to 50 nm, more favorably not much exceeding 5 to 15 nm. The composite metal oxide fine particles are employed to alleviate photocatalytic action in the case of titanium oxide. Accordingly, in the case of too small average particle diameter, improvement of refractory index is not expected, and abrasion-resistance is also deteriorated. On the one hand, since too large average particle diameter gives rise to light scattering, the above-mentioned range of particle diameter is desirable.

The titanium oxide may be amorphous or crystalline (anatase-, rutile-, brookite-type, etc.). Thickness of coating layer of antimony oxide is not especially limited, but it is favorably to be usually in a range of 1/200 to 1/5 of the above-mentioned metal oxide fine particle diameter.

It is especially favorable in terms of weathering resistance that dicyandiamide is not used alone but used together with organic polycarboxylic acid. The dicyandiamide provides significant development of weathering resistance in the presence of organic polycarboxylic acid. Specifically, as examples of organic polycarboxylic acid, maleic acid, maleic anhydride, fumaric acid, fumaric anhydride, itaconic acid, itaconic anhydride, and so forth are enumerated. By means of synergistic effect when dicyandiamide and organic polycarboxylic acid are used simultaneously, the use of itaconic acid is especially the most favorable in terms of weathering resistance.

In the presence of titanium oxide, a Co(II) (divalent cobalt) compound can delay progression of photocatalytic reaction and consequently suppress the decomposition of high-molecular material, which is the component of hard coating layer. Accordingly, it is possible to prevent the hard coating layer from being deteriorated. It is favorable to employ such a Co(II) compound that is dissolved by solvent for the hard coating composition containing the titanium oxide, for example, alcohol or propylenglycolether and has compatibility with the above-mentioned component A without inhibiting its physical property. More specifically, a chelate compound of Co(II) ion is favorable.

As a Co(II) chelator, especially one having an aliphatic ligand is favorable. As an aliphatic ligand, for example, acetylacetone, di-n-butoxide-mono-ethylacetate, di-n-butoxide-mono-methylacetate, methylethylketoxime, 2,4-hexanedione, 3,5-heptanedione and acetoxime, and so forth are used favorably. Especially, the use of acetylacetone constituting a metal complex of divalent cobalt acetylacetone is the most favorable in terms of weathering resistance. Moreover, in the presence of the Co(II) compound, dicyandiamide, and organic polycarboxylic acid (especially, itaconic acid), the weathering resistance is the most significantly improved.

With regard to the components A to E which are used to form the above-mentioned hard coating layer, the following compounding ratio is favorable:
(1) As to the components A and B (composite metal oxide fine particles, main components of which are hydrolysate of organic silicon compound and titanium oxide), ratio of solid content is A:B=8:2 to 3:7;
(2) C - As to dicyandiamide, percentage of solid content of A+B is 3 to 15%;
(3) D - As to organic polycarboxylic acid, percentage of solid content of A+B is 5 to 25%;
(4) E - As to Co(II) compound, percentage of solid content of A+B+C+D is 0.1 to 5.0%.

When there is more component B than component A, the refractive index of the hard coating layer being formed is improved, but layers become fragile and are apt to generate cracks. Accordingly, the above-mentioned ratio is the most favorable to the component B in connection with the component A. When the quantity of component C is low, weathering resistance (adhesion) is deteriorated. On the contrary, when the quantity of component C is excessively high, balance with the component A+B becomes worse so that optical performance is deteriorated. Accordingly, the above-mentioned ratio is the most favorable. Moreover, when the quantity of component D is low, weathering resistance (cracking resistance) is deteriorated. When the quantity of component D is excessively high, hardness is lowered. Accordingly, the above-mentioned ratio is the most favorable. Since an effect of improvement in weathering resistance (adhesion and cracking) is not produced when the quantity of component E is low, it is necessary for the component E to exist in conjunction with the components C and D. Besides, since a layer is colored when the quantity of component E is excessively high, ultimately the above-mentioned ratio is the most favorable.

It is desirable to mix various additives with the above-mentioned hard coating composition in order to further improve the performance of a layer. For example, a hardener, an epoxy resin may be used as additives for improving the adhesion with the optical substrate and stainability, and an ultraviolet absorber for preventing ultraviolet rays from reaching a substrate layer being formed. It is also possible to mix a hardening catalyst for accelerating hardening.

It is possible to produce hard coating liquid by dissolving or dispersing the hard coating composition into solvent and further diluting it with diluent as occasion demands. Alcohol, ketone, ester, ether, and so forth are enumerated as diluent.

A wet method is a publicly known method such as dip method, spray method, roll coat method, spin coat method, whereas a coating layer is formed by applying the hard coating liquid to a substrate, drying, and heating as occasion demands. It is favorable that the thickness of the coating layer is usually approximately 0.5 to 10.0µm. This is because it is difficult to obtain practical abrasion-resistance when the film thickness is excessively thin, and because problems of appearance such as deterioration of profile irregularity or crack are apt to occur when it is excessively thick.

Besides, the substrate is usually pretreated prior to coating. Acid-alkaline degreasing, plasma treatment, ultrasonic cleaning, and so forth of the substrate surface are enumerated as pretreatment. By means of these pretreatments, stains having an influence on adhesion of layers on the surface of the substrate will be removed.

Moreover, a primary layer may be interposed between the optical substrate and the hard coating layer, that is, the hard coating layer may be formed on the primary layer. In other words, when the primary layer is formed on the surface of the optical substrate, the primary layer can be interpreted as the surface of the optical substrate. The primary layer is a junction layer disposed in this position to improve adhesion between the hard coating layer and the lens substrate, and is made up of urethane resin, acrylic resin, methacrylic resin, organosilicon resin, and so forth. A wet method such as dip-, spray-, roll coat-, spin coat-method is also employed freely. The primary layer is generally formed by immersing the lens substrate into the primary liquid. The primary liquid is prepared by mixing a resin material, selected from the above-mentioned resins, and inorganic oxide fine particle sol as occasion demands into water or alcohols solvent.

The antireflection coating of the present invention has a single- or multi-layer structure. When the antireflection coating is made up of a single-layer, it is favorable to be the organosilicon-compound-based layer. When the antireflection coating is made up of a multi-layer, it is favorable that the uppermost layer is the organosilicon-compound-based layer. For example, in the case of two-layer structure antireflection coating, it is necessary to configure in due order from the uppermost layer, low refractive index layer, high refractive index layer. In the case of three-layer structure antireflection coating, it is necessary to configure in due order from the uppermost layer, low refractive index layer, high refractive index layer, and low refractive index layer. Besides, lots of organosilicon compound and inorganosilicon compound of low refractive index material SiO₂ are used for low refractive index layer. It is favorable to mainly use organosilicon compound and take in inorganosilicon compound as occasion demands.

The organosilicon compound expressed by the following equation is used:

R¹ₐR²_{b}Si(OR³)_{4-(a+b)}

R¹ₐR²_{b}SiX_{4-(a+b)}

(Where, R¹ is an alkyl group with the number of carbons from 1 to 6 having an organic group selected from a group of an alkyl group with the number of carbons from 1 to 6, a vinyl group, an epoxy group, a methacryloxy group, a mercapto group, an amino group: R² is an alkyl group with the number of carbons from 1 to 3, an alkylene group, a cycloalkyl group, an alkyl halide, an aryl group; R³ is an alkyl group with the number of carbons from 1 to 4, an alkylene group, a cyclo alkyl group, an alkoxyalkyl group, an arylalkyl group; X is a halogen atom; a=0 or 1, b=0, 1 or 2.)

As organosilicon compounds expressed by the equation above, specifically, tetraethoxysilane, methyltrimethoxysilane, vinyltrimethoxysilane, γ -methacryloxypropyltrimethoxysilane, trimethyl chlorosilane, α -glycidoxymethyltrimethoxysilane, α -glycidoxyethyltrimethoxysilane, β -glycidoxyethyltrimethoxysilane, γ -glycidoxypropyltrimethoxysilane, γ -glycidoxypropyltriethoxysilane, γ -glysidoxypropylmethyldimethoxysilane, γ -glycidoxypropylmethyldiethoxysilane, β -(3,4-epoxycyclohexyl)-ethyltrimethoxysilane, β -(3,4-epoxycyclohexyl)-ethyltriethoxysilane, γ-aminopropyltrimethoxysilane, γ -aminopropyltriethoxysilane, N- β (aminoethyl)- γ -aminopropylmethyldimethoxysilane, N- β (aminoethyl)- γ -aminopropylmethyldiethoxysilane, and so forth are enumerated. These can be used independently or in conjunction with more than one compound.

More than one kind of metal oxide fine particle selected from zirconium, antimony, tantalum, titanium, tin, indium, and so forth is used for high refractive index layer. In the case of three-layer antireflection coating, it is configured from the uppermost layer in due order of low refractive index layer, high refractive index layer, low refractive index layer. It is favorable that the low refractive index layer on a substrate is intermediate between the low refractive index of the uppermost layer and the high refractive index of the second uppermost layer. This layer is referred to as intermediate refractive index layer. As intermediate refractive index layers, more than one kind of metal oxide fine particles selected from aluminum, zirconium, tantalum, titanium, tin, indium, and so forth, or equivalent coating layers configured by low refractive index substance of SiO₂ and more than one kind of metal oxide fine particles selected from high refractive index substances of zirconium, tantalum, titanium, tin, indium, and so forth, are widely used. Besides, the intermediate refractive index layer can also be formed by changing the component ratio of the metal oxide fine particle of the high refractive index layer. Zirconium is especially favorable to the high refractive index layer and intermediate refractive index layer. Since titanium helps to deteriorate hardness of the coating by means of photocatalytic action, titanium is not relatively favorable to the high refractive index layer and intermediate refractive index layer.

The antireflection coating of the present invention is formed by a wet method. A wet method is a publicly known method such as dip method, spray method, roll coat method, spin coat method, whereas a coating layer is formed by applying antireflection treatment liquid prepared for each layer, drying, and heating as occasion demands.

It is possible to heat the antireflection coating by hot blast and infrared ray radiation, and so forth. Heating temperature is determined depending on applicable optical substrate and coating composition used, and usually from room temperature to 250°C, more favorably from 60°C to 150°C. At a temperature lower than room temperature the antireflection coating is cured or dried insufficiently, and at a temperature higher than room temperature a substrate or coating shows sign of yellowing.

The antireflection treatment liquid is prepared by mixing the organosilicon compound and/or metal oxide fine particle, which are used to form the above-mentioned individual layers, in water or alcohols solvent. The antireflection coating is applied by either of these methods. That is to say, first of all, the antireflection treatment liquid for a first layer is spread over the surface of the hard coating and then the solvent is evaporated by a publicly known method to form the first layer. Then, the antireflection treatment liquid for a second layer is similarly spread over the surface of the first layer before forming the second layer according to the similar process. Moreover, the third layer or so are formed as occasion demands until desired number of layers is formed.

A refractive index of low refractive index layer is favorably 1.35 to 1.50, more favorably 1.35 to 1.45. A refractive index of high refractive index layer is favorably 1.63 to 1.75, more favorably 1.68 to 1.75. A refractive index of intermediate refractive index layer is favorably 1.50 to 1.60, more favorably 1.53 to 1.58.

Thickness of each coating layer is favorably 50 to 200 nm, especially a range of 60 to 130 nm is favorable.

Besides, in order to improve adhesion before forming the antireflection coating, it is favorable to carry out corona or plasma treatment on the hard coating layer.

Besides, freedom of slipping treatment is further given to the top face of the antireflection coating. Slipping treatment is defined as follows: an extremely thin (10 nm or less) slipping layer is formed by applying, for example, a reactive silicon compound or a fluorine-containing organic silane compound.

### Best Mode of Carrying Out the Invention

Even though specific descriptions of embodiments which specified the present invention are given in the following, the present invention is not limited only to these.

### (Embodiment 1)

### <Lens used>

In addition to 100 weight parts in total (50 weight parts of norborne-nediisocyanate, 25 weight parts of pentaerythritoltetrakis(3-mercaptopropionate), 25 weight parts of bis(mercaptomethyl)-3,6,9-tritia-1,11-undecanediol), uniform solution in which 0.03 weight parts of dibutyltindichloride is dispensed as catalyser, is poured in a lens mold. This lens mold is heated and cured at 20 to 130°C for 20 hours to form a flat lens of the number of power of 0.00 having optical property of refractive index of 1.594 and abbe's number of 42. A plastic lens is formed as optical substrate by edging this flat lens.

### <Titanium oxide sol>

As titanium oxide composite fine particle (so-called titanium oxide sol), "HINEX AB20" (Catalysts & Chemicals Industries Co., Ltd.) is used for the present embodiment. HINEX AB20 is a composite fine particle comprising a titanium oxide as a principal component and a zirconium oxide and a silicon oxide as other fine particles. More specifically, the coupling between the titanium oxide and the zirconium oxide is surrounded by the coupling between the titanium oxide and the silicon oxide and further coated by an antimony oxide from outside. Concentration of solid content is 25%, and methanol is used as dispersion solvent.

### <Adjustment of hard coating liquid>

150 weight parts of methanol is added to 11 weight parts of tetraethoxysilane, 76 weight parts of γ-glycidoxypropyltrimethoxysilane, 22 weight parts of γ-glycidoxypropylmethyldiethoxysilane. While being cooled by ice and agitating this solution, 24 parts of 0.1N hydrochloric acid is delivered by drops to it before being hydrolyzed. This solution is further agitated around the clock at 5°C (This solution is taken as base solution).

192 weight parts of the above-mentioned "HINEX AB20", 0.60 weight parts of silicone surfactant (Nippon Unicar Co., Ltd. "SILWELT L-7001") as leveling agent, 20.02 weight parts of itaconic acid, 8.33 weight parts of dicyandiamide, 1.48 weight parts of Co(II) acetylacetonate are added to 283 weight parts of this base solution in total. This solution is further agitated at 5°C around the clock to obtain hard coating liquid with 30% of solid content.

### <Hard coating layer formed>

The hard coating composition is applied to the pre-treated substrate by a dipping method (pull-up speed 300 mm/min), and cured at 100°C for two hours to obtain a hard coating layer of 2.0 to 3.0µm in thickness. A weathering resistance test is made on plastic lenses on which thus obtained hard coating layer is formed.
As weathering resistance test, 60-hour and 120-hour ultraviolet exposure tests are made using a Sunshine Weather Meter (Suga Test Instruments Co., Ltd.), respectively. After exposure, presence of crack and adhesion are evaluated. Appearance is judged visually. "○" denotes without crack and "×" denotes occurrence of crack. For adhesion, cross cut tape test is made pursuant to JIS D-0202. Cut lines are made on the surface of a substrate at intervals of 1 mm with a knife to form a hundred of grids. Then, after strongly press a cellophane tape (Nichiban Co., Ltd.) on a hundred of grids, swiftly pull it out perpendicularly from the surface to peel the grids. Then, the number of grids left on the surface of the substrate is counted and ranked in the following two steps: "○" is in a range of 100 to 95 and "×" in a range of 94 to 0.

The result of the test is shown in Table 1.

### (Embodiment 2)

In an embodiment 2, a hard coating layer is formed under the same condition as the embodiment 1 and an antireflection coating is formed on it by a wet method.

### <Antireflection coating formed>

63 weight parts of tetraethylorthosilicate, 632 weight parts of methanol, 100 weight parts of 0.01N hydrochloric acid, 33 weight parts of methanol silica sol (Nissan Chemical Industries, Ltd.; 30% of solid content) are added. After hydrolysis is completed, pH is further adjusted to '5' to prepare colloid fluid. Then, 200 weight parts of isopropyl alcohol and 300 weight parts of methyl alcohol are added to prepare the base fluid.

γ-glycidoxypropyltrimethoxysilane hydrolysate [30 weight parts of γ -glycidoxypropyltrimethoxysilane, 60 weight parts of methyl alcohol, 105 weight parts of 0.01N hydrochloric acid] is added to 1000 weight parts of this base fluid, and agitated at room temperature for 24 hours. Furthermore, 1.0 weight part of silicone surfactant and 2 weight parts of aluminum acetylacetonate are added to prepare the antireflection treatment fluid for the antireflection coating.
After corona treatment is carried out on the surface of the hard coating layer from a distance of 30 mm for 20 seconds, this antireflection treatment fluid is treated under the spin coat condition (number of revolution; 3000rpm, time of revolution; 30 sec.) and applied to the surface of the hard coating layer before heating and curing at 120°C for 1.5 hour to form the antireflection coating.

In the embodiment 2, concerning the weathering resistance and adhesion, a test is also made under the same condition as the embodiment 1. Furthermore, adhesion of antireflection coating to the hard coating layer, that is to say wear resistance of antireflection coating, is tested in the embodiment 2.

A coating surface is scrubbed with a #000 steel wool under load of 1 kg for the wear resistance test. The condition of the surface is checked and judged as follows:
"○" ... The antireflection coating is not scrubbed out.
"△" ... The antireflection coating is partly scrubbed out and reflection color is discolored.
"x" ... The antireflection coating is scrubbed out and whitened.

The result of the above-mentioned test is shown in Table 1.

### (Embodiment 3)

In an embodiment 3, a hard coating layer is formed under the same condition as the embodiment 1 and an antireflection coating is formed on it by a wet method similar to the embodiment 2.

### <Antireflection coating formed>

An antireflection coating comprising two coating layers (a lower layer (high refractive index layer) and an upper layer (low refractive index layer)) is formed on the surface of the hard coating layer.

### a. Lower layer coating

2.0 weight parts of zirconium oxide fine powder (Sumitomo Osaka Cement Co., Ltd., particle size: 10 to 30 nm), 10 weight parts of propylglycolmonomethylether, 88.0 weight parts of ethyl alcohol are mixed. A surfactant (Adeka Corporation, ADEKA COL CS 1 4 1E) is added to this fluid and mixed. After that, this fluid is dispersed for ten minutes using an ultrasonic homogenizer (Central chemistry, Sonifier 450) to prepare uniform paint. Finally, concentration is diluted with ethyl alcohol so that solid content is 5%. Thus, the antireflection treatment fluid for the lower layer is prepared.

After corona treatment is carried out on the surface of the hard coating layer from a distance of 30 mm for 20 seconds, this antireflection treatment fluid for the lower layer is treated under the spin coat condition (number of revolution; 1500rpm, time of revolution; 60 sec.) to form a high refractive index layer as a first layer of the antireflection coating on the surface of the hard coating layer before heating and curing at 80°C for 10 minutes.

### b. Upper layer coating

The antireflection treatment fluid similar to the embodiment 2 is used as antireflection treatment fluid for an upper layer and treated under the spin coat condition (number of revolution; 3000rpm, time of revolution; 30 sec.) to form a low refractive index layer as a second layer of the antireflection coating on the surface of the high refractive index layer before heating and curing at 120°C for 1.5 hours to form an antireflection coating comprising two layer coatings.

In the embodiment 3, concerning the weathering resistance and adhesion, a test is made under the same condition as the embodiment 1. Furthermore, adhesion of antireflection coating to the hard coating layer, that is to say wear resistance of antireflection coating, is tested in the embodiment 3 similar to the embodiment 2. The condition of the wear resistance test is similar to the embodiment 2.

The result of the test is shown in Table 1.

### (Embodiment 4)

In an embodiment 4, a hard coating layer is formed under the same condition as the embodiment 1 and an antireflection coating is formed on it by a wet method similar to the embodiment 2.

### <Antireflection coating formed>

An antireflection coating comprising two coating layers (a lower layer (high refractive index layer) and an upper layer (low refractive index layer)) is formed on the surface of the hard coating layer.

### a. Lower layer coating

High refractive index treatment fluid "X-12-2170A" (Shin-Etsu Chemical Co., Ltd.), with titanium oxide as a major constituent and the concentration of solid content being 5%, is used for antireflection treatment fluid for the lower layer.

After corona treatment is carried out on the surface of the hard coating layer from a distance of 30 mm for 20 seconds, this antireflection treatment fluid for the lower layer is treated under the spin coat condition (number of revolution; 1500rpm, time of revolution; 60 sec.) to form a high refractive index layer as a first layer of the antireflection coating on the surface of the hard coating layer before heating and curing at 80°C for 10 minutes.

### b. Upper layer coating

The antireflection treatment fluid similar to the embodiment 2 is used as antireflection treatment fluid for an upper layer and treated under the spin coat condition (number of revolution; 2000rpm, time of revolution; 30 sec.) to form a low refractive index layer as a second layer of the antireflection coating on the surface of the high refractive index layer before heating and curing at 120°C for 1.5 hours to form an antireflection coating comprising two layer coatings.

In the embodiment 4, concerning the weathering resistance and adhesion, a test is also made under the same condition as the embodiment 1. Furthermore, adhesion of the antireflection coating to the hard coating layer, that is to say wear resistance of antireflection coating, is tested in the embodiment 4 similar to the embodiments 2 and 3. The condition of the wear resistance test is similar to the embodiment 2.

The result of the test is shown in Table 1.

### (Comparative example 1)

In the comparative example 1, for a mixture of 283 weight parts in total of the same base fluid as the above-mentioned embodiment 1, "OPTOLAKE 1120F" (Catalysts & Chemicals Industries Co., Ltd.) is used instead of "HINEX AB20" in the embodiment 1 and added so as to be the same ratio of solid content as the embodiment 1.

"OPTOLAKE 1120F" comprises composite fine particles which have the coupling between the ferric oxide and the oxide silicon as well as the titanium oxide as principal component. And the composite fine particles are surrounded and coated by the oxide silicon. Besides, the surface of the composite fine particles is not coated by the antimony oxide. Concentration of solid content is 20%, and methanol is used as dispersion solvent.

Besides, 0.60 weight part of the same leveling agent as the embodiment 1 and 1.20 weight parts of aluminum perchlorate as curing catalyst are added and further agitated at 5°C around the clock to prepare the hard coating fluid of solid content of about 23%. Unlike the embodiment 1, the itaconic acid and the dicyandiamide are not added.

The hard coating fluid prepared as mentioned above is used to form the hard coating layer in a procedure similar to the above-mentioned embodiment, and the weathering resistance test is made similar to the above-mentioned embodiments. The result of the test is shown in Table 1.

### (Comparative example 2)

In the comparative example 2, for a mixture of 283 weight parts in total of the same base fluid as the above-mentioned embodiment 1, "OPTOLAKE 1130Z(U-25)" (Catalysts & Chemicals Industries Co., Ltd.) is used instead of "HINEX AB20" in the embodiment 1. "OPTOLAKE 1130Z(U-25)" comprises composite fine particles which have the zirconium oxide and the oxide silicon as other fine particles as well as the titanium oxide as principal component. More specifically, the coupling between the titanium oxide and the oxide silicon is surrounded by the coupling between the titanium oxide and the zirconium oxide and further coated by the coupling between the oxide silicon and the zirconium oxide from outside. Concentration of solid content is 30%, and methanol is used as dispersion solvent.

Besides, 0.60 weight part of the same leveling agent as the embodiment 1, 1.20 weight parts of Co(II) acetylacetonate, and 1.20 weight parts of aluminum acetylacetonate as a curing catalyst are added and further agitated at 5°C around the clock to prepare the hard coating fluid of solid content of about 25%. Unlike the embodiment 1, the itaconic acid and the dicyandiamide are not added.

The hard coating fluid prepared as mentioned above is used to form the hard coating layer in a procedure similar to the above-mentioned embodiment, and the weathering resistance test is made similar to the above-mentioned embodiments. The result of the test is shown in Table 1.

### (Comparative example 3)

In the comparative example 3, for a mixture of 283 weight parts in total of the same base fluid as the above-mentioned embodiment 1, the same "HINEX AB20" as in the embodiment 1 is used.

Besides, 0.60 weight part of the same leveling agent as the embodiment 1 and 1.20 weight parts of Co(II) acetylacetonate are added and further agitated at 5°C around the clock to prepare the hard coating fluid of solid content of about 25%. Unlike the embodiment 1, the itaconic acid and the dicyandiamide are not added.

The hard coating fluid prepared as mentioned above is used to form the hard coating layer in a procedure similar to the above-mentioned embodiment, and the weathering resistance test is made similar to the above-mentioned embodiments. The result of the test is shown in Table 1.

### (Comparative example 4)

In the comparative example 4, for a mixture of 283 weight parts in total of the same base fluid as the above-mentioned embodiment 1, the same "OPTOLAKE 1130Z(U-25)" as the comparative example 2 is used and added so as to obtain the same ratio of solid content as the embodiment 1.

Besides, 0.60 weight part of the same leveling agent as the embodiment 1, 1.48 weight parts of aluminum acetylacetonate, 8.33 weight parts of dicyandiamide, 20.02 weight parts of itaconic acid are added and further agitated at 5°C around the clock to prepare the hard coating fluid of solid content of about 30%. Unlike the embodiment 1, the Co(II) acetylacetonate is not added.

The hard coating fluid prepared as mentioned above is used to form the hard coating layer in a procedure similar to the above-mentioned embodiment, and the weathering resistance test is made similar to the above-mentioned embodiments. The result of the test is shown in Table 1.

### (Comparative example 5) .

In the comparative example 5, for a mixture of 283 weight parts in total of the same base fluid as the above-mentioned embodiment 1, the same "HINEX AB20" as the embodiment 1 is used.

Besides, 0.60 weight part of the same leveling agent as the embodiment 1, 8.33 weight parts of dicyandiamide, and 20.02 weight parts of itaconic acid are added and further agitated at 5°C around the clock to prepare the hard coating fluid of solid content of about 30%. Unlike the embodiment 1, the Co(II) acetylacetonate is not added.

The hard coating fluid prepared as mentioned above is used to form the hard coating layer in a procedure similar to the above-mentioned embodiment, and the weathering resistance test is made similar to the above-mentioned embodiments. The result of the test is shown in Table 1.

### (Comparative example 6)

In the comparative example 6, for a mixture of 283 weight parts in total of the same base fluid as the above-mentioned embodiment 1, the same "OPTOLAKE 1130Z(U-25)" as the comparative example 2 is used.

Besides, 0.60 weight part of the same leveling agent as the embodiment 1, 8.33 weight parts of dicyandiamide, and 1.28 weight parts of Co(II) acetylacetonate are added and further agitated at 5°C around the clock to prepare the hard coating fluid of solid content of about 28%. Unlike the embodiment 1, the itaconic acid is not added.

The hard coating fluid prepared as mentioned above is used to form the hard coating layer in a procedure similar to the above-mentioned embodiment, and the weathering resistance test is made similar to the above-mentioned embodiments. The result of the test is shown in Table 1. (Comparative example 7)

In the comparative example 7, for a mixture of 283 weight parts in total of the same base fluid as the above-mentioned embodiment 1, the same "HINEX AB20" as the embodiment 1 is used.

Besides, 0.60 weight part of the same leveling agent as the embodiment 1, 8.33 weight parts of dicyandiamide, and 1.28 weight parts of Co(II) acetylacetonate are added and further agitated at 5°C around the clock to prepare the hard coating fluid of solid content of about 27%. Unlike the embodiment 1, the itaconic acid is not added.

The hard coating fluid prepared as mentioned above is used to form the hard coating layer in a procedure similar to the above-mentioned embodiment, and the weathering resistance test is made similar to the above-mentioned embodiment. The result of the test is shown in Table 1.

### (Comparative example 8)

In the comparative example 8, for a mixture of 283 weight parts in total of the same base fluid as the above-mentioned embodiment 1, the same "HINEX AB20" as the embodiment 1 is used.

Besides, 0.60 weight part of the same leveling agent as the embodiment 1, 8.33 weight parts of dicyandiamide, weight parts of itaconic acid, and 1.48 weight parts of Co(III) (trivalent cobalt) acetylacetonate instead of Co(II) acetylacetonate in the embodiment are added and further agitated at 5°C around the clock to prepare the hard coating fluid of solid content of about 29%.

The hard coating fluid prepared as mentioned above is used to form the hard coating layer in a procedure similar to the above-mentioned embodiment, and the weathering resistance test is made similar to the above-mentioned embodiment. The result of the test is shown in Table 1.

### (Comparative example 9)

In the comparative example 9, for a mixture of 283 weight parts in total of the same base fluid as the above-mentioned embodiment 1, the same "HINEX AB20" as the embodiment 1 is used.

Besides, 0.60 weight part of the same leveling agent as the embodiment 1, 8.33 weight parts of dicyandiamide, 20.02 weight parts of itaconic acid, and 1.48 weight parts of Fe(II) (divalent iron) acetylacetonate instead of Co(II) acetylacetonate in the embodiment are added and further agitated at 5°C around the clock to prepare the hard coating fluid of solid content of about 29%.

The hard coating fluid prepared as mentioned above is used to form the hard coating layer in a procedure similar to the above-mentioned embodiment, and the weathering resistance test is made similar to the above-mentioned embodiment. The result of the test is shown in Table 1.

### (Comparative example 10)

In the comparative example 10, for a mixture of 283 weight parts in total of the same base fluid as the above-mentioned embodiment 1, the same "HINEX AB20" as the embodiment 1 is used.

Besides, 0.60 weight part of the same leveling agent as the embodiment 1, 8.33 weight parts of dicyandiamide, 20.02 weight parts of itaconic acid, and 1.48 weight parts of Fe(III) (trivalent iron) acetylacetonate instead of Co(II) acetylacetonate in the embodiment are added and further agitated at 5°C around the clock to prepare the hard coating fluid of solid content of about 29%.

The hard coating fluid prepared as mentioned above is used to form the hard coating layer in a procedure similar to the above-mentioned embodiment, and the weathering resistance test is made similar to the above-mentioned embodiment. The result of the test is shown in Table 1.

### (Comparative example 11)

In the comparative example 11, for a mixture of 283 weight parts in total of the same base fluid as the above-mentioned embodiment 1, the same "HINEX AB20" as the embodiment 1 is used.

Besides, 0.60 weight part of the same leveling agent as the embodiment 1, 8.33 weight parts of dicyandiamide, 20.02 weight parts of itaconic acid, and 1.48 weight parts of Cu(II) (divalent copper) acetylacetonate instead of Co(II) acetylacetonate in the embodiment are added and further agitated at 5°C around the clock to prepare the hard coating fluid of solid content of about 29%.

The hard coating fluid prepared as mentioned above is used to form the hard coating layer in a procedure similar to the above-mentioned embodiment, and the weathering resistance test is made similar to the above-mentioned embodiment. The result of the test is shown in Table 1.

### (Comparative example 12)

In the comparative example 12, the hard coating layer is formed under the same condition as the above-mentioned comparative example 2. Besides, in the comparative example 12, an antireflection coating is formed on the upper surface of the hard coating layer under the same condition as the above-mentioned embodiment 2, and the weathering resistance test is carried out similar to the above-mentioned embodiments. The antireflection coating is formed under the same condition as the embodiment 3. The result of test is shown in Table 1.

### (Comparative example 13)

In the comparative example 13, the hard coating layer is formed under the same condition as the above-mentioned comparative example 5. Besides, in the comparative example 13, an antireflection coating is formed on the upper surface of the hard coating layer under the same condition as the above-mentioned embodiment 2, and the weathering resistance test is carried out similar to the above-mentioned embodiments. The result of test is shown in Table 1.

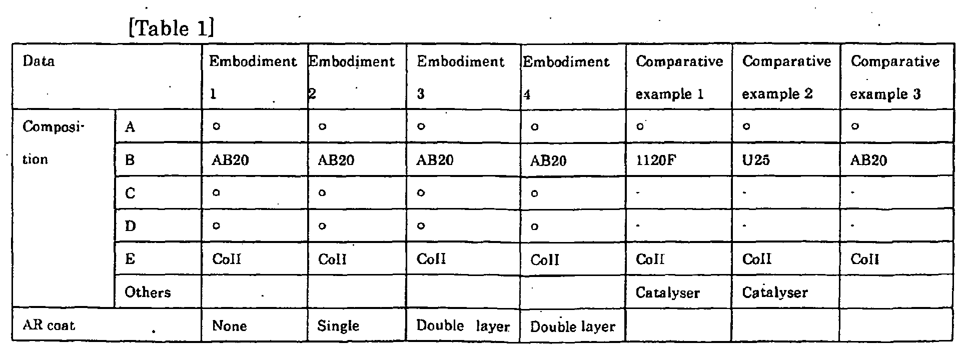

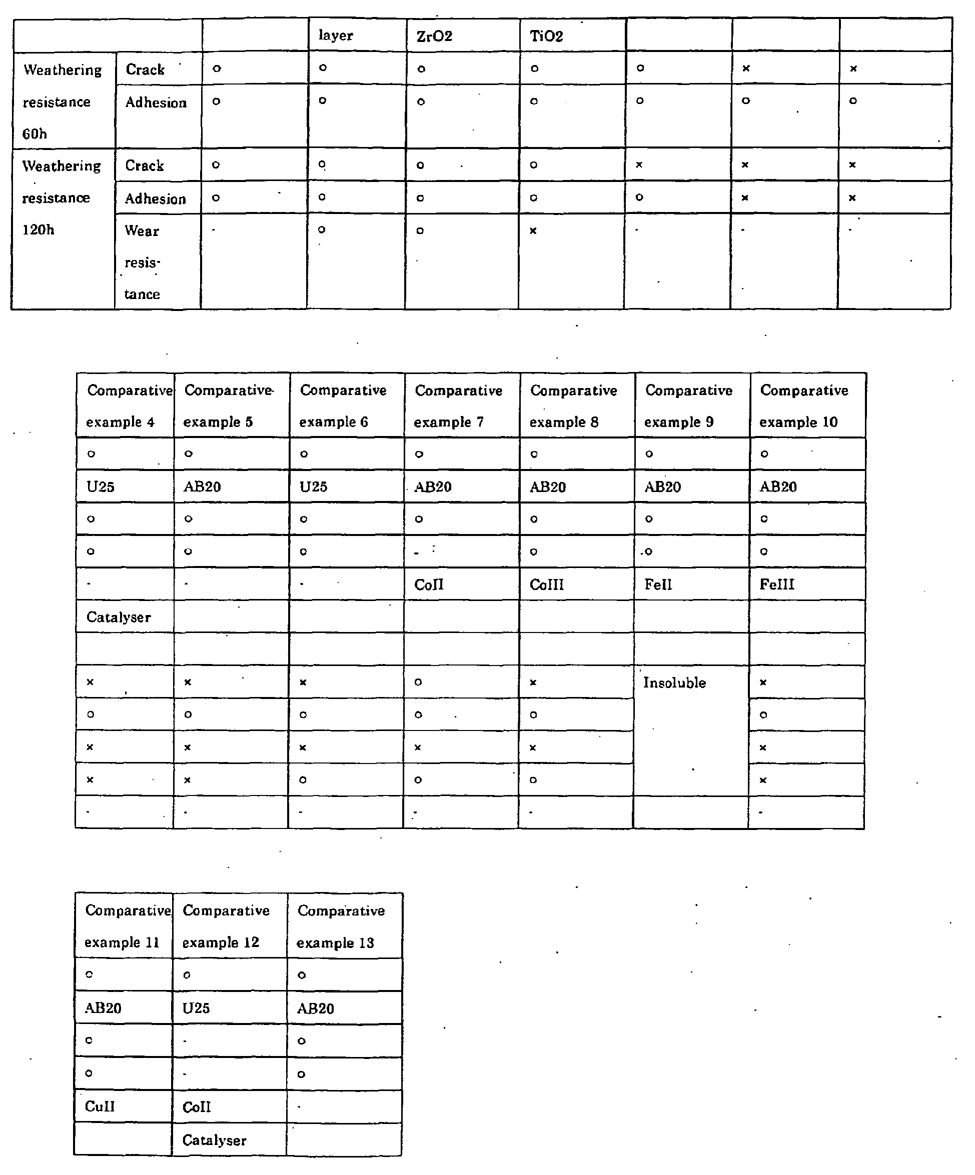

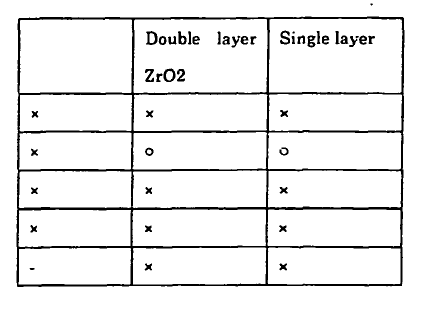

### <Result>

As the result of the above-mentioned weathering resistance test, it is found that by contrast with the embodiments of the invention, the weathering resistance decreases if the base fluid lacks even any one of the dicyandiamide, itaconic acid and Co(II). Besides, it is also found that no good result is obtained with a compound other than the Co(II) since crack occurs on a metallic chelate instead of Co(II), for example, in the case of Co(III).

Besides, it is found that good weathering resistance is obtained even when the antireflection coating is formed on the upper surface of the hard coating layer and that the wear resistance of the antireflection coating is also good after making the weathering resistance test. However, it is found that the wear resistance is deteriorated after the weathering resistance test as compared with other metal oxides if the titanium oxide is used as a lower coating layer of the antireflection coating.

## Claims

1. A hard coating composition for forming a hard coating layer on a surface of a plastic optical substrate **characterized in that** the hard coating composition contains the following components A to E:
A. Organosilicon compound's hydrolysate
B. Titanium-oxide-based composite metal oxide fine particles
C. Dicyandiamide
D. Organic polycarboxylic acid
E. Co(II) compound

2. A hard coating composition according to claim 1, wherein said organic polycarboxylic acid is itaconic acid.

3. A hard coating composition according to claim 1 or 2, wherein said fine particles of a composite of metal oxide are coated by antimony.

4. A hard coating composition according to any one of claim 1 to 3, the ratio of component A to component B is between '8: 2' to '3 : 7'.

5. A plastic optical product comprising a hard coating layer which is either directly formed on a surface of a plastic optical substrate or indirectly formed on such surface for example by being formed on another layer applied on said surface, **characterized in that** the hard coating is made of a hard coating composition that contains the following components A to E:
A. Organosilicon compound's hydrolysate
B. Titanium-oxide-based composite metal oxide fine particles
C. Dicyandiamide
D. Organic polycarboxylic acid
E. Co(II) compound

6. A plastic optical product according to claim 5, wherein said organic polycarboxylic acid is itaconic acid.

7. A plastic optical product according to claim 5 or 6, wherein a single-layer or multiple-layers of antireflection coating are formed on the top of said hard coating layer by wet method.

8. A plastic optical product according to claim 7, wherein said antireflection coating is made of a film structure in which an organosilicon-compound-based coating layer is placed at least on the uppermost layer.

9. A plastic optical product according to claim 7 or 8, wherein said multiple-layers of antireflection coating are comprised of alternate layers of a low refractive index layer and a high refractive index layer, wherein the high refractive index layer is a metal-oxide-based coating layer.

10. A plastic optical product according to claim 9, wherein said high refractive index layer is a metal-oxide-based coating layer exclusive of titanium oxide.

11. A plastic optical product according to any one of claims 5 to 10, wherein said fine particles of a composite of metal oxide-based coating layer are coated by antimony.

12. A plastic optical product according to any one of claims 5 to 11, wherein the ratio of component A to component B is between '8: 2' to '3: 7'.

## Patentansprüche

1. Hartbeschichtungszusammensetzung zur Ausbildung einer Hartbeschichtungsschicht auf einer Oberfläche eines optischen Kunststoffsubstrats, **dadurch gekennzeichnet, daß** die Hartbeschichtungszusammensetzung die folgenden Bestandteile A bis E enthält:
A. Organosiliziumverbindunghydrolysat
B. titanoxidbasierte Metalloxidverbundmaterialfeinpartikel
C. Dicyandiamid
D. Organische Polycarboxylsäure
E. Co(II)-Verbindung

2. Hartbeschichtungszusammensetzung nach Anspruch 1, wobei die organische Polycarboxylsäure Itaconsäure ist.

3. Hartbeschichtungszusammensetzung nach Anspruch 1 oder 2, wobei die Metalloxidverbundmaterialfeinpartikel mit Antimon beschichtet sind.

4. Hartbeschichtungszusammensetzung nach einem der Ansprüche 1 bis 3, wobei das Verhältnis von Bestandteil A zu Bestandteil B zwischen 8:2 und 3:7 liegt.

5. Optisches Kunststoffprodukt, umfassend eine Hartbeschichtungsschicht, welche entweder direkt auf einer Oberfläche eines optischen Kunststoffsubstrats ausgebildet ist oder auf einer solchen Oberfläche indirekt, z.B. durch Ausbilden auf einer anderen Schicht, die auf diese Oberfläche aufgetragen ist, ausgebildet ist, **dadurch gekennzeichnet, daß** die Hartbeschichtung aus einer Hartbeschichtungszusammensetzung gefertigt ist, welche die folgenden Bestandteile A bis E enthält:
A. Organosiliziumverbindunghydrolysat
B. titanoxidbasierte Metalloxidverbundmaterialfeinpartikel
C. Dicyandiamid
D. Organische Polycarboxylsäure
E. Co(II)-Verbindung

6. Optisches Kunststoffprodukt nach Anspruch 5, wobei die organische Polycarboxylsäure Itaconsäure ist.

7. Optisches Kunststoffprodukt nach Anspruch 5 oder 6, wobei eine einzelne Schicht oder mehrere Schichten einer Antireflektionsbeschichtung auf der Oberseite der Hartbeschichtungsschicht durch ein Naßverfahren ausgebildet sind.

8. Optisches Kunststoffprodukt nach Anspruch 7, wobei die Antireflektionsbeschichtung aus einer Filmstruktur gemacht ist, in welcher zumindest auf der obersten Schicht eine organosiliziumverbindungsbasierte Beschichtungsschicht angeordnet ist.

9. Optisches Kunststoffprodukt nach Anspruch 7 oder 8, wobei die mehreren Schichten der Antireflektionsbeschichtung aus alternierenden Schichten einer Schicht mit niedrigem Brechungsindex und einer Schicht mit hohem Brechungsindex gebildet sind, wobei die Schicht mit hohem Brechungsindex eine metalloxidbasierte Beschichtungsschicht ist.

10. Optisches Kunststoffprodukt nach Anspruch 9, wobei die Schicht mit hohem Brechungsindex eine metalloxidbasierte Beschichtungsschicht ohne Titanoxid ist.

11. Optisches Kunststoffprodukt nach einem der Ansprüche 5 bis 10, wobei die Metalloxidverbundmaterialfeinpartikel der Beschichtungsschicht mit Antimon beschichtet sind.

12. Optisches Kunststoffprodukt nach einem Ansprüche 5 bis 11, wobei das Verhältnis von Bestandteil A zu Bestandteil B zwischen 8:2 und 3:7 liegt.

## Revendications

1. Composition de revêtement dur pour former une couche de revêtement dur sur une surface d'un substrat optique en matière plastique **caractérisée en ce que** la composition de revêtement dur contient les composants A à E suivants :
A. un hydrolysat de composé d'organosilicium
B. des particules fines d'oxyde de métal composite à base d'oxyde de titane
C. du dicyandiamide
D. de l'acide polycarboxylique organique
E. un composé Co(II)

2. Composition de revêtement dur selon la revendication 1, dans laquelle ledit acide polycarboxylique organique est de l'acide itaconique.

3. Composition de revêtement dur selon la revendication 1 ou 2, dans laquelle lesdites particules fines d'un composite d'oxyde de métal sont revêtues par de l'antimoine.

4. Composition de revêtement dur selon l'une quelconque des revendications 1 à 3, dans laquelle le rapport entre le composé A et le composé B est compris entre « 8 : 2 » et « 3 : 7 ».

5. Produit optique en matière plastique comprenant une couche de revêtement dur qui est soit directement formée sur une surface d'un substrat optique en matière plastique, soit formée indirectement sur cette surface, par exemple en étant formée sur une autre couche appliquée sur ladite surface, **caractérisé en ce que** le revêtement dur est constitué d'une composition de revêtement dur qui contient les composants A à E suivants :
A. un hydrolysat de composé d'organosilicium
B. des particules fines d'oxyde de métal composite à base d'oxyde de titane
C. du dicyandiamide
D. de l'acide polycarboxylique organique
E. un composé Co(II)

6. Produit optique en matière plastique selon la revendication 5, dans laquelle ledit acide polycarboxylique organique est de l'acide itaconique.

7. Produit optique en matière plastique selon la revendication 5 ou 6, dans lequel une seule couche ou de multiples couches de revêtement antireflet sont formées sur ladite couche de revêtement dur par un procédé par voie humide.

8. Produit optique en matière plastique selon la revendication 7, dans lequel ledit revêtement antireflet est constitué d'une structure en film dans laquelle une couche de revêtement à base de composé d'organosilicium est placée au moins sur la couche la plus haute.

9. Produit optique en matière plastique selon la revendication 7 ou 8, dans lequel lesdites multiples couches de revêtement antireflet sont composées de couches alternées d'une couche à faible indice de réfraction et d'une couche à indice de réfraction élevé, la couche à indice de réfraction élevé étant une couche de revêtement à base d'oxyde de métal.

10. Produit optique en matière plastique selon la revendication 9, dans lequel ladite couche à indice de réfraction élevé est une couche de revêtement à base d'oxyde de métal à l'exclusion de l'oxyde de titane.

11. Produit optique en matière plastique selon l'une quelconque des revendications 5 à 10, dans lequel lesdites particules fines d'un composite de couche de revêtement à base d'oxyde de métal sont revêtues par de l'antimoine.

12. Produit optique en matière plastique selon l'une quelconque des revendications 5 à 11, dans lequel le rapport entre le composé A et le composé B est compris entre « 8 : 2 » et « 3 : 7 ».
